# EUROPEAN PATENT APPLICATION

(11) **EP 3 018 033 A1**
(43) Date of publication of application: **11.05.2016**
(21) Application number: 14819799.9
(22) Date of filing: 03.07.2014
(51) Int. Cl.: B62D 1/185

(54) **STEERING COLUMN DEVICE**

(30) Priority: 03.07.2013 JP 2013139905; 02.04.2014 JP 2014076202
(71) Applicant: JTEKT Corporation, Osaka-shi, Osaka 542-8502 (JP)
(72) Inventor: TANAKA, Eiji, Osaka-shi Osaka 542-8502 (JP); IMAGAKI, Susumu, Osaka-shi Osaka 542-8502 (JP)
(74) Representative: Winter, Brandl, Fürniss, Hübner, Röss, Kaiser, Polte - Partnerschaft mbB
(86) International application number: PCT/JP2014/067776
(87) International publication number: WO 2015/002265

(57) **Abstract**

A steering column device includes a first tube on an inner side and a second tube on an outer side which are fitted into each other so as to be relatively slidable in an axial direction, and rotatably support a steering shaft. A plurality of projections that come into contact with the inner periphery of the second tube and extend in the axial direction of the first tube are provided on the outer periphery of the first tube. The plurality of projections are disposed at unequal intervals in a peripheral direction of the first tube so as to come close to the vertical plane which includes a central axis line of the first tube.

## Description

### Technical Field

The present invention relates to a steering column device.

### Background Art

In the related art, there is proposed a steering apparatus provided with an inner tube and an outer tube supporting a steering shaft being fitted into each other, in which both tubes slide relatively in an axial direction with a plurality of projections which are provided on the outer periphery of the inner tube at equal intervals in a peripheral direction abutting on an inner periphery of the outer tube (see PTL 1).

### Citation List

### Patent Literature

[PTL 1] JP-A-2009-51353

### Summary of Invention

### Technical Problem

For example, there is a concern that a sliding load of both tubes varies when both tubes slide relatively while the steering shaft is thrust obliquely upward at the time of secondary impact of a vehicle, when both tubes slide relatively for telescopic adjustment, and the like.

Here, an object of the present invention is to provide a steering column device which is able to suppress variance of the sliding load.

### Solution to Problem

In order to realize the object, the invention of Claim 1 provides a steering column device (1; 100; 200; 300; 400; 500) including a first tube (10; 109; 210; 309; 410; 509) on an inner side and a second tube (9; 110; 209; 310; 409; 510) on an outer side which are fitted into each other so as to be relatively slidable in an axial direction, and rotatably support a steering shaft (3), in which a plurality of projections (61 to 64; 161 to 164; 261 to 264; 361 to 364; 71, 261 to 264, 71, 72; 361 to 364, 71, 72) that come into contact with the inner periphery (9a; 110a; 209a; 310a; 409a; 510a) of the second tube and extending in the axial direction (X) of the first tube are provided on the outer periphery (10a; 109a; 210a; 309a; 410a; 509a) of the first tube, and the plurality of projections are disposed at unequal intervals in a peripheral direction (Z) of the first tube so as to come close to a vertical plane (VP) which includes a central axis line (C1) of the first tube.

Here, the alphanumeric characters in parentheses represent corresponding configuration elements or the like in the embodiments which will be described later, but of course, this does not mean that the present invention is to be limited to the embodiments. The same applies below.

In addition, as in Claim 2, each projection (261 to 264; 361 to 364) may include a top section (261 c to 264c; 361 c to 364c) with a circular cross section which comes into contact with the inner periphery of the second tube, and a radius of curvature (R1) of the top section of each projection may be smaller than a radius of curvature (R2) of the inner periphery of the second tube.

In addition, as in Claim 3, the plurality of projections may include a plurality of first projections, and an angle (θ1c to θ4c) formed between a plane (P1c to P4c) which includes the top section of each first projection and the central axis line of the first tube, and the vertical plane is less than 45°.

In addition, as in Claim 4, the plurality of projections may include a plurality of second projections (71, 72), and an angle (β1c, β2c) formed between a plane which includes the top section of each second projection and the central axis line of the first tube, and the vertical plane is more than or equal to 45° and is less than or equal to 90°.

In addition, as in Claim 5, the plurality of projections may include a plurality of first projections, each of the first projections may have a contact region with respect to the second tube formed in a predetermined range in a peripheral direction of the first tube, the contact region may include a first end section (61 a, 62a, 63a, 64a; 161 a, 162a, 163a, 164a) on a side close to the vertical plane in the peripheral direction, a second end section (61 b, 62b, 63b, 64b; 161b, 162b, 163b, 164b) on a side far from the vertical plane, and a center section (61 c, 62c, 63c, 64c; 161 c, 162c, 163c, 164c) between the first end section and the second end section, and an angle (θ1c, θ2c, θ3c, θ4c) formed between a plane (P1c, P2c, P3c, P4c) which includes the center section of each first projection and the central axis line of the first tube, and the vertical plane is less than or equal to 45°.

In addition, as in Claim 6, an angle (θ1b, θ2b, θ3b, θ4b) formed between a plane (P1b, P2b, P3b, P4b) which includes the second end section of each first projection and the central axis line of the first tube, and the vertical plane is less than or equal to 45°.

In addition, as in Claim 7, each of the projections may be provided non-continuously in an axial direction of the first tube.

In addition, as in Claim 8, the first tube may be a lower tube (10; 210; 410), and the second tube may be an upper tube (9; 209; 409).

In addition, as in Claim 9, the first tube may be an upper tube (109; 309; 509), and the second tube may be a lower tube (110; 310; 510).

### Advantageous Effects of Invention

According to the invention in Claim 1, the plurality of projections which come into contact with the inner periphery of the second tube on an outer side by being provided on the outer periphery of the first tube on an inner side come close to the vertical plane side which includes the central axis line of the first tube by being disposed at unequal intervals in the peripheral direction, and thus it is possible to reduce a sliding load and it is possible to suppress variance of the sliding load when both tubes slide relatively while the steering shaft is thrust obliquely upward at the time of secondary impact, and when both tubes slide relatively at the time of telescopic adjustment.

According to the invention in Claim 2, the top section of the projection with a circular cross section comes into contact with respect to the inner periphery of the second tube substantially in a line contact state, and thus it is possible to suppress variance of a contact position in the peripheral direction. As a result, it is possible to reliably suppress variance of the sliding load between both tubes.

According to the invention in Claim 3, each first projection is disposed in a range in which a center angle is less than 45° with the vertical plane as a reference when the first tube is viewed from the axial direction, and thus it is possible to suppress the second tube being interposed in a wedge shape between adjacent first projections interposing the vertical plane. As a result, it is possible to reliably suppress variance in sliding load between both tubes at the time of secondary impact or during telescopic adjustment.

According to the invention in Claim 4, the second projection is disposed in a range in which the center angle is 45° to 90° with the vertical plane as a reference when the first tube is viewed from the axial direction. Accordingly, it is possible to suppress the sliding load between both tubes at the time of secondary impact or during telescopic adjustment to be low using the first projection and to improve rigidity in a left and right direction using the second projection.

In addition, according to the invention in Claim 5, it is possible to suppress variance of the sliding load between both tubes by substantially suppressing the second tube from being interposed in a wedge shape between adjacent first projections interposing the vertical plane.

In addition, according to the invention in Claim 6, each first projection is disposed in a range in which a center angle is 45° or less with the vertical plane as a reference when the first tube is viewed from the axial direction, and thus it is possible to suppress the second tube being interposed in a wedge shape between adjacent first projections interposing the vertical plane. As a result, it is possible to suppress variance of the sliding load between both tubes.

In addition, according to the invention in Claim 7, it is possible to suppress variance of the sliding load when both tubes slide via the projections while generating runout between both tubes.

In addition, according to the invention in Claim 8, it is possible to apply the invention to a general configuration in which an outer tube is set to an upper side.

In addition, according to the invention in Claim 9, it is possible to also apply the invention to a configuration in which an inner tube is set to the upper side.

### Brief Description of Drawings

Fig. 1 is a schematic side view of a steering apparatus which includes a steering column device of a first embodiment of the present invention, and illustrates a schematic configuration of the steering apparatus.
Fig. 2 is a schematic sectional view of the steering column device in Fig. 1, and corresponds to a sectional view along line II-II in Fig. 1.
Fig. 3 is a sectional view of a lower tube (first tube) on an inner side and an upper tube (second tube) on an outer side which configure the steering column in the first embodiment.
Fig. 4 is a planar view of the lower tube (first tube) in the first embodiment, and illustrates an upper half of the lower tube in a peripheral direction.
Fig. 5 is a bottom surface view of the lower tube (first tube) in the first embodiment, and illustrates a lower half of the lower tube in the peripheral direction.
Fig. 6 is a schematic side view of a steering column device of a second embodiment of the present invention, and illustrates a schematic configuration of the steering column device.
Fig. 7 is a sectional view of an upper tube (first tube) on an inner side and a lower tube (second tube) on an outer side which configure the steering column in the second embodiment.
Fig. 8 is a planar view of the upper tube (first tube) in the second embodiment, and illustrates an upper half of the upper tube in a peripheral direction.
Fig. 9 is a bottom surface view of the upper tube (first tube) in the second embodiment, and illustrates a lower half of the upper tube in a peripheral direction.
Fig. 10 is a schematic side view of a steering column device of a third embodiment of the present invention, and illustrates a schematic configuration of the steering column device.
Fig. 11 is a sectional view of a lower tube (first tube) on an inner side and an upper tube (second tube) on an outer side which configure the steering column in the third embodiment.
Fig. 12 is a planar view of the lower tube (first tube) in the third embodiment, and illustrates an upper half of the lower tube in a peripheral direction.
Fig. 13 is a bottom surface view of the lower tube (first tube) in the third embodiment, and illustrates a lower half of the lower tube in the peripheral direction.
Fig. 14 is a schematic side view of a steering column device of a fourth embodiment of the present invention, and illustrates a schematic configuration of the steering column device.
Fig. 15 is a sectional view of an upper tube (first tube) on an inner side and a lower tube (second tube) on an outer side which configure the steering column in the fourth embodiment.
Fig. 16 is a planar view of the upper tube (first tube) in the fourth embodiment, and illustrates an upper half of the upper tube in a peripheral direction.
Fig. 17 is a bottom surface view of the upper tube (first tube) in the fourth embodiment, and illustrates a lower half of the upper tube in a peripheral direction.
Fig. 18 is a sectional view of a lower tube (first tube) on an inner side and an upper tube (second tube) on an outer side which configure a steering column in a fifth embodiment.
Fig. 19 is a sectional view of an upper tube (first tube) on an inner side and a lower tube (second tube) on an outer side which configure a steering column in a sixth embodiment.
Fig. 20 is a sectional view of a lower tube (first tube) on an inner side and an upper tube (second tube) on an outer side which configure a steering column in a seventh embodiment.

### Description of Embodiments

Embodiments of the present invention will be described with reference to the drawings.

### (First Embodiment)

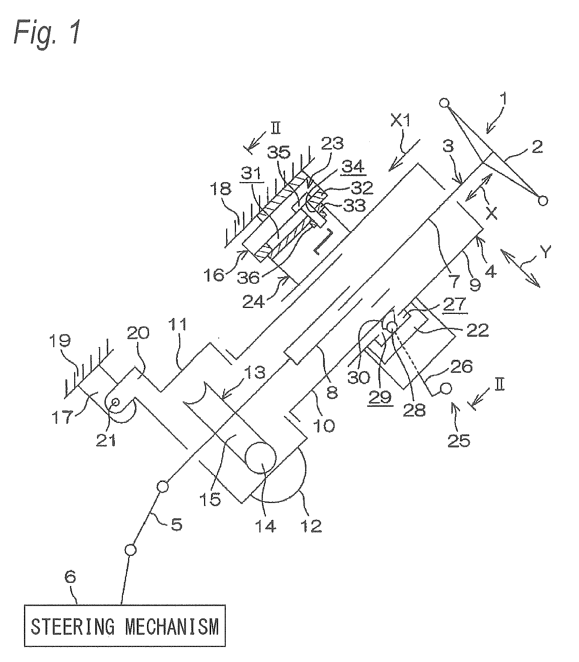

Fig. 1 is a schematic view of a schematic configuration of a steering apparatus including a steering column device of a first embodiment of the present invention. With reference to Fig. 1, a steering column device 1 is provided with a steering member 2 such as a steering wheel, a steering shaft 3 which is connected to the steering member 2 so as to be integrally rotatable with one end (upper end in an axial direction), and a steering column 4 with a cylindrical shape which rotatably supports the steering shaft 3 via a bearing which is not shown in the drawings.

The other end (lower end in the axial direction) of the steering shaft 3 protrudes downward from the steering column 4 in the axial direction, and is connected to a steering mechanism 6 such as a rack and pinion mechanism via an intermediate shaft 5 or the like. The steering mechanism 6 steers a steering wheel (not shown in the drawings) in conjunction with steering of the steering member 2.

The steering shaft 3 has an upper shaft 7 and a lower shaft 8 which are connected so as to be simultaneously rotatable and relatively movable in the axial direction using, for example, a spline coupling.

The steering column 4 is provided with an upper tube 9 (second tube) which is an outer tube and a lower tube 10 (first tube) which is an inner tube that are fitted into each other so as to be relatively movable in the axial direction, and a housing 11 which is connected to the lower end of the lower tube 10 in the axial direction.

A speed reduction mechanism 13 which reduces and transmits power of an electric motor 12 for auxiliary steering to the lower shaft 8 is accommodated in the housing 11. The speed reduction mechanism 13 has a driving gear 14 which is connected to the electric motor 12 so as to be simultaneously rotatable with a rotation shaft (not shown in the drawings) of the electric motor 12, and a driven gear 15 which simultaneously rotates with the lower shaft 8 meshing with the driving gear 14.

The steering column 4 is attached to vehicle-body side members 18 and 19 (for example, a cross member or the like) via an upper fixing bracket 16 which is disposed on the rear side of the vehicle and a lower fixing bracket 17 which is disposed on the front side of the vehicle.

A lower column bracket 20 is fixed to the housing 11 of the steering column 4. The lower column bracket 20 is supported so as to be rotatable about a tilt central shaft 21 via the tilt central shaft 21 and as a pivot shaft on the lower fixing bracket 17 which is fixed to the vehicle-body side member 19. Thereby, the entire body of the steering column 4 is rotatable about the tilt central shaft 21, and as a result, tilt adjustment in which a height position of the steering member 2 is adjusted is possible. In addition, telescopic adjustment is possible in which the height position of the steering member 2 is adjusted by moving the upper tube 9 (second tube) in an axial direction X with respect to the lower tube 10 (first tube) of the steering column 4.

An upper column bracket 22 is fixed to the upper tube 10 of the steering column 4. The upper column bracket 22 is lockable (tilt lock and telescopic lock) with respect to a support bracket 24 which is held so as to hang with respect to a hanging mechanism 23 on the upper fixing bracket 16. The steering column device 1 is provided with a lock mechanism 25 which realizes tilt lock and telescopic lock.

The lock mechanism 25 is provided with an operation lever 26 which is rotatably operable, and a fastening shaft 28 which is inserted into a tilt long hole (not shown in the drawings) that is provided on the side plate of the support bracket 24 and into a telescopic long hole 27 which is provided on the side plate of the upper column bracket 22, and rotates integrally with the operation lever 26.

In addition, the lock mechanism 25 is provided with a cam mechanism (not shown in the drawings) which realizes tilt lock and telescopic lock by pressure welding the side plate of the support bracket 24 and upper column bracket 22 accompanying rotatory operation of the operation lever 26 being supported on the fastening shaft 28, and a push-up cam 30 which is provided so as to be integrally rotatable with the fastening shaft 28 and realizes locking between both tubes 9 and 10 by fixing both tubes 9 and 10 by pushing up the lower tube 10 through an opening 29 of the upper tube 9.

A main plate 32 in which a long hole 31 is formed which extends in a column movement direction X1 (direction parallel to the axial direction X) at the time of secondary impact is provided on the upper fixing bracket 16. A bolt insertion hole 34 is formed on a top plate 33 of the support bracket 24. The hanging mechanism 23 is provided with a hanging bolt 35 which is inserted in the long hole 31 and the bolt insertion hole 34, and a nut 36 which is joined with the hanging bolt 35. The support bracket 24 is hung using the hanging bolt 35 which is supported by the upper fixing bracket 16 and the nut 36 which is joined with the hanging bolt 35.

Although the present embodiment is described based on an example in which the steering column device 1 is applied to an electric power steering device, the present invention may be applied to a manual steering device. In addition, although the present embodiment is described based on a case in which the steering column device 1 is tilt adjustable, the present invention may be applied to a steering column device which does not have a tilt adjustment function, and may be applied to a steering column device which is tilt adjustable and telescopically adjustable.

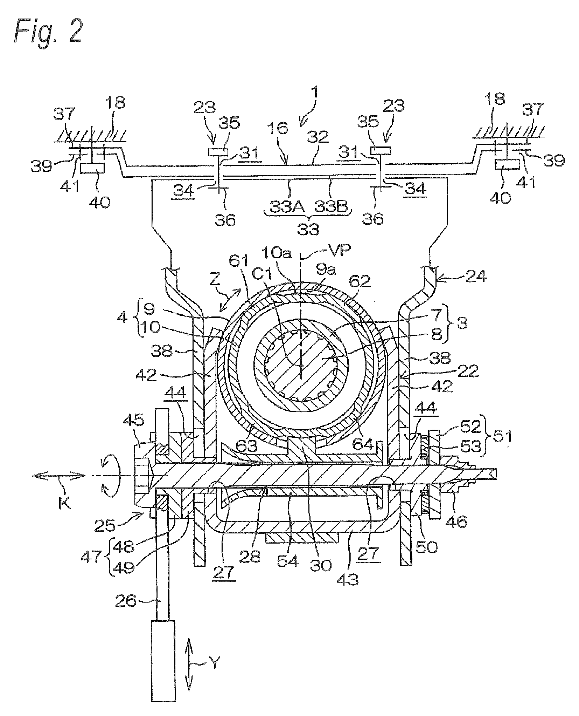

Fig. 2 is a sectional view along a line II-II in Fig. 1. With reference to Fig. 2, the upper fixing bracket 16 is provided with a pair of mounting plates 37 which extend outward from the main plate 32.

The support bracket 24 is provided with the top plate 33 and a pair of side plates 38 which extend downward in a tilt direction Y. The top plate 33 is provided with a first top plate 33A which connects between the upper ends of the pair of side plates 38 in the tilt direction Y, and a second top plate 33B which is fixed to an upper surface of the first top plate 33A. The bolt insertion hole 34 into which the hanging bolt 35 is inserted is formed through both top plates 33A and 33B. The second top plate 33B is provided with a pair of plates to be mounted 39 which extend outward.

A fixing screw 40 which is inserted into each mounting plate 37 of the upper fixing bracket 16 and the corresponding plate to be mounted 39 of the support bracket 24 is fixed to the vehicle-body side member 18. Each mounting plate 37 of the upper fixing bracket 16 is fixed to the vehicle-body side member 18 using the fixing screw 40.

The plate to be mounted 39 which corresponds to each mounting plate 37 is connected via breakable resin pins 41 which are breakable at the time of secondary impact and are inserted into both plates 37 and 39. At the time of secondary impact, accompanying breakage of the resin pin 41, the support bracket 24 moves in a column movement direction (a direction which is orthogonal to the paper surface in Fig. 2, refer to the column movement direction X1 in Fig. 1) being separated from a mounting position with respect to the upper fixing bracket 16.

The upper column bracket 22 is formed in a groove shape which is provided with a pair of side plates 42 which correspond respectively to the pair of side plates 38 of the support bracket 24, and a connection plate 43 which connects between the lower ends of the pair of side plates 42 in the tilt direction Y.

The fastening shaft 28 is formed of a bolt which passes through a tilt long hole 44 of the side plate 38 of the support bracket 24, and the telescopic long hole 27 of the side plate 42 of the upper column bracket 22. The head section 45 of an end of the fastening shaft 28 is fixed so as to be integrally rotatable with the operation lever 26. A nut 46 is screwed on a thread portion which is provided on the other end of the fastening shaft 28.

The cam mechanism 47 which realizes tilt lock and telescopic lock accompanying the rotatory operation of the operation lever 26 is interposed between the operation lever 26 and one side plate 38 of the support bracket 24. The cam mechanism 47 is provided with an annular first cam 48 and an annular second cam 49 which are supported by a shaft section of the fastening shaft 28. Cam projections which engage with each other are formed on surfaces of the first cam 48 and the second cam 49, the surfaces facing each other.

The first cam 48 is connected so as to be integrally rotatable with the operation lever 26, and axial direction movement thereof with respect to the fastening shaft 28 is regulated. The second cam 49 is provided with an annular plate as a fastening section which faces the other side plate 38 of the support bracket 24, and a boss which extends from the annular plate. The boss of the second cam 49 is inserted into the tilt long hole 44 of the one side plate 38 of the support bracket 24 so that the rotation of the second cam 49 is regulated. The second cam 49 is movably supported in the axial direction of the fastening shaft 28.

An annular first interposed member 50 and an annular second interposed member 51 which are supported by the fastening shaft 28 are interposed between the nut 46 and the other side plate 38 of the support bracket 24. The first interposed member 50 is provided with an annular plate which faces the other side plate 38 of the support bracket 24, and a boss which extends from the annular plate. The boss of the first interposed member 50 is inserted into the tilt long hole 44 of the other side plate 38 of the support bracket 24 so that the rotation of the first interposed member 50 is regulated.

The second interposed member 51 is provided with a washer 52 which is interposed between the nut 46 and the first interposed member 50, and a needle roller bearing 53 which is interposed between the washer 52 and the first interposed member 50.

A sleeve 54 which integrally rotates with the fastening shaft 28 is engaged with the outer periphery of the shaft section of the fastening shaft 28 using, for example, a serration fitting. The push-up cam 30 is integrally provided with the sleeve 54.

Accompanying the rotation of the operation lever 26, the second cam 49 is moved in a fastening shaft direction K due to the first cam 48 rotating with respect to the second cam 49, and the side plate 38 of the support bracket 24 is fastened by being interposed between the second cam 49 an the annular plate of the first interposed member 50. Thereby, each side plate 38 of the support bracket 24 realizes tilt lock and telescopic lock by being pressure welded to the corresponding side plate 42 of the upper column bracket 22. In addition, locking is realized between both tubes 9 and 10 by the push-up cam 30 pushing up the lower tube 10.

A plurality of projections 61, 62, 63, and 64 which come into contact with an inner periphery 9a of the upper tube 9 (second tube) on the outer side are provided on an outer periphery 10a of the lower tube 10 (first tube) on the inner side to extend in the axial direction (a direction which is orthogonal to the paper surface in Fig. 2, the axial direction X in Fig. 1). The plurality of projections 61 to 64 which are disposed at unequal intervals in the peripheral direction Z come close to the vertical plane VP side which includes the central axis line C1 of the lower tube 10.

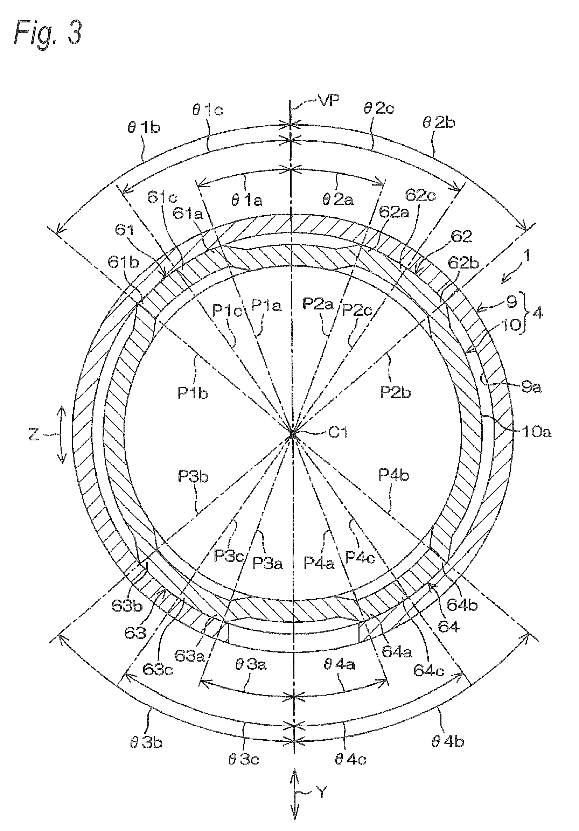

In detail, as shown in Fig. 3, each projection 61 to 64 has a contact region with respect to the upper tube 9 formed in a predetermined range in the peripheral direction Z of the lower tube 10. The projection 61 and the projection 62 are disposed on both sides which interpose the vertical plane VP in the upper half of the lower tube 10 in the peripheral direction Z. The projection 61 and the projection 62 may be disposed symmetrically with respect to the vertical plane VP, and need not be disposed symmetrically.

The projection 63 and the projection 64 are disposed on both sides which interpose the vertical plane VP in the lower half of the lower tube 10 in the peripheral direction Z. The projection 63 and the projection 64 are disposed on both sides which interpose the vertical plane VP in the lower half of the lower tube 10 in the peripheral direction Z. The projection 63 and the projection 64 may be disposed symmetrically with respect to the vertical plane VP, and need not be disposed symmetrically.

The contact region of the projection 61 with respect to the upper tube 9 is provided, with a first end section 61 a at a side close to the vertical plane VP in the peripheral direction Z, a second end section 61 b at a side far from the vertical plane VP, and a center section 61 c between the first end section 61 a and the second end section 61 b.

An angle θ1c formed between a plane P1c which includes the center section 61c of the projection 61 and the central axis line C1 of the lower tube 10, and the vertical plane VP is 45° or less (θ1c ≤ 45°). Thereby, the projection 61 is disposed so as to come close to the vertical plane VP. In addition, naturally, an angle θ1a formed between a plane P1a which includes the first end section 61 a of the projection 61 and the central axis line C1 of the lower tube 10, and the vertical plane VP is 45° or less (θ1a ≤ 45°). Here, it is more preferable that an angle θ1b formed between a plane P1b which includes the second end section 61 b of the projection 61 and the central axis line C1 of the lower tube 10, and the vertical plane VP is 45° or less (θ1b ≤ 45°).

The contact region of the projection 62 with respect to the upper tube 9 is provided with a first end section 62a at a side close to the vertical plane VP in the peripheral direction Z, a second end section 62b at a side far from the vertical plane VP, and a center section 62c between the first end section 62a and the second end section 62b.

An angle θ2c formed between a plane P2c which includes the center section 62c of the projection 62 and the central axis line C1 of the lower tube 10, and the vertical plane VP is 45° or less (θ2c ≤ 45°). Thereby, the projection 62 is disposed so as to come close to the vertical plane VP. In addition, naturally, an angle θ2a formed between a plane P2a which includes the first end section 62a of the projection 62 and the central axis line C1 of the lower tube 10, and the vertical plane VP is 45° or less (θ2a ≤ 45°). Here, it is more preferable that an angle θ2b formed between a plane P2b which includes the second end section 62b of the projection 62 and the central axis line C1 of the lower tube 10, and the vertical plane VP is 45° or less (θ2b ≤ 45°).

The contact region of the projection 63 with respect to the upper tube 9 is provided with a first end section 63a at a side close to the vertical plane VP in the peripheral direction Z, a second end section 63b at a side far from the vertical plane VP, and a center section 63c between the first end section 63a and the second end section 63b.

An angle θ3c formed between a plane P3c which includes the center section 63c of the projection 63 and the central axis line C1 of the lower tube 10, and the vertical plane VP is 45° or less (θ3c ≤ 45°). Thereby, the projection 63 is disposed so as to come close to the vertical plane VP. In addition, naturally, an angle θ3a formed between a plane P3a which includes the first end section 63a of the projection 63 and the central axis line C1 of the lower tube 10, and the vertical plane VP is 45° or less (θ3a ≤ 45°). Here, it is more preferable that an angle θ3b formed between a plane P3b which includes the second end section 63b of the projection 63 and the central axis line C1 of the lower tube 10, and the vertical plane VP is 45° or less (θ3b ≤ 45°).

The contact region of the projection 64 with respect to the upper tube 9 is provided, with a first end section 64a at a side close to the vertical plane VP in the peripheral direction Z, a second end section 64b at a side far from the vertical plane VP, and a center section 64c between the first end section 64a and the second end section 64b.

An angle θ4c formed between a plane P4c which includes the center section 64c of the projection 64 and the central axis line C1 of the lower tube 10, and the vertical plane VP is 45° or less (θ4c ≤ 45°). Thereby, the projection 64 is disposed so as to come close to the vertical plane VP. In addition, naturally, an angle θ4a formed between a plane P4a which includes the first end section 64a of the projection 64 and the central axis line C1 of the lower tube 10, and the vertical plane VP is 45° or less (θ4a ≤ 45°). Here, it is more preferable that an angle θ4b formed between a plane P3b which includes the second end section 64b of the projection 64 and the central axis line C1 of the lower tube 10, and the vertical plane VP is 45° or less (θ4b ≤ 45°).

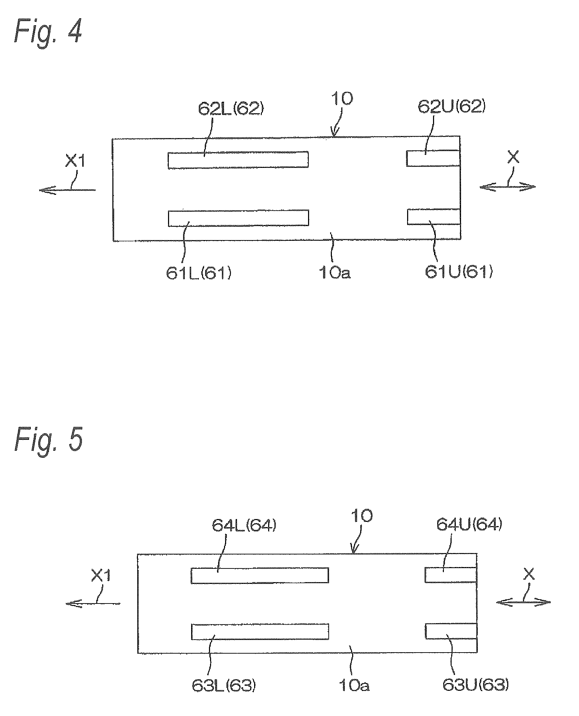

In addition, as shown in Fig. 4 which is a planar view of the lower tube 10, each projection 61 and 62 in the upper half of the lower tube 10 in the peripheral direction is provided non-continuously in the axial direction X. That is, the projection 61 is configured by a projection 61 U on the upper side in the axial direction X and a projection 61 L on the lower side in the axial direction X. The projection 62 is configured by a projection 62U on the upper side in the axial direction X and a projection 62L on the lower side in the axial direction X.

In addition, as shown in Fig. 5 which is a bottom surface view of the lower tube 10, each projection 63 and 64 in the lower half of the lower tube 10 in the peripheral direction is provided non-continuously in the axial direction X. That is, the projection 63 is configured by a projection 63U on the upper side in the axial direction X and a projection 63L on the lower side in the axial direction X. The projection 64 is configured by a projection 64U on the upper side in the axial direction X and a projection 64L on the lower side in the axial direction X.

Although not shown in the drawings, since the upper end of the upper tube 9 in the axial direction is thrust obliquely upward at the time of secondary impact, the projections 61L and 62L on the lower side in the axial direction X in the peripheral direction upper half of the lower tube 10 and the projections 63U and 64U on the upper side in the axial direction X in the peripheral direction lower half of the lower tube 10 are pressed strongly toward the inner periphery 9a of the upper tube 9.

Meanwhile, when locking by the lock mechanism 25 is released for telescopic adjustment, since the upper end side of the upper tube 9 in the axial direction is pushed down by the own weight of the upper tube 9, the own weight of the steering member 2, or the like, the projections 61 U and 62U on the upper side in the axial direction X in the peripheral direction upper half of the lower tube 10 and the projections 63L and 64L on the lower side in the axial direction X in the peripheral direction lower half of the lower tube 10 are pressed strongly toward the inner periphery 9a of the upper tube 9.

According to the present embodiment, the plurality of projections 61 to 64 which come into contact with the inner periphery 9a of the upper tube 9 (second tube) by being provided on the outer periphery 10a of the lower tube 10 (first tube) come close to the vertical plane VP side which includes the central axis line C1 of the lower tube 10 by being disposed at unequal intervals in the peripheral direction Z. Accordingly, it is possible to reduce the sliding load and it is possible to suppress variance of the sliding load when both tubes 9 and 10 slide relatively while the steering shaft 3 is thrust obliquely upward at the time of secondary impact, and when both tubes 9 and 10 slide relatively at the time of telescopic adjustment.

In addition, angles θ1c, θ2c, θ3c, and θ4c formed between the planes P1c, P2c, P3c, and P4c which include the center sections 61c, 62c, 63c, and 64c in the peripheral direction Z of the contact region of each projection 61, 62, 63, and 64 and the central axis line C1 of the lower tube 10 (first tube), and the vertical plane are 45° or less. Thereby, it is possible to suppress variance in the sliding load between both tubes 9 and 10 by substantially suppressing the upper tube 9 (second tube) from being interposed in a wedge shape between adjacent projections 61, 62; and 63, 64 interposing the vertical plane VP.

In addition, angles θ1b, θ2b, θ3b, and θ4b formed between the planes P1b, P2b, P3b, and P4b which include the second end sections 61 b, 62b, 63b, and 64b of the contact region of each projection 61, 62, 63, and 64, and the central axis line C1 of the lower tube 10 (first tube), and the vertical plane VP is 45° or less. Thereby, since the contact region of each projection 61 to 64 is disposed in a range in which the center angle with the vertical plane VP as a reference is 45° or less, it is possible to suppress the upper tube 9 (second tube) being interposed in a wedge shape between the adjacent projections 61, 62; and 63, 64 interposing the vertical plane VP. Thereby, it is possible to suppress variance of the sliding load between both tubes 9 and 10.

In addition, it is possible to suppress variance of the sliding load when both tubes 9 and 10 slide via the projections 61 to 64 while generating runout between both tubes 9 and 10.

### (Second Embodiment)

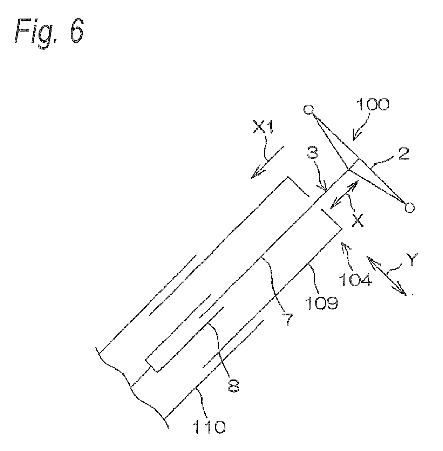

Next, Fig. 6 illustrates a schematic side view of a steering column device 100 of a second embodiment of the present invention. The main difference of the second embodiment in Fig. 6 from the first embodiment in Fig. 1 is that a steering column 104 is provided with an upper tube 109 (first tube) which is an inner tube, a lower tube 110 (second tube) which is an outer tube, and a housing (not shown in the drawings) which is connected to the lower end of the lower tube 110 (second tube) in the axial direction.

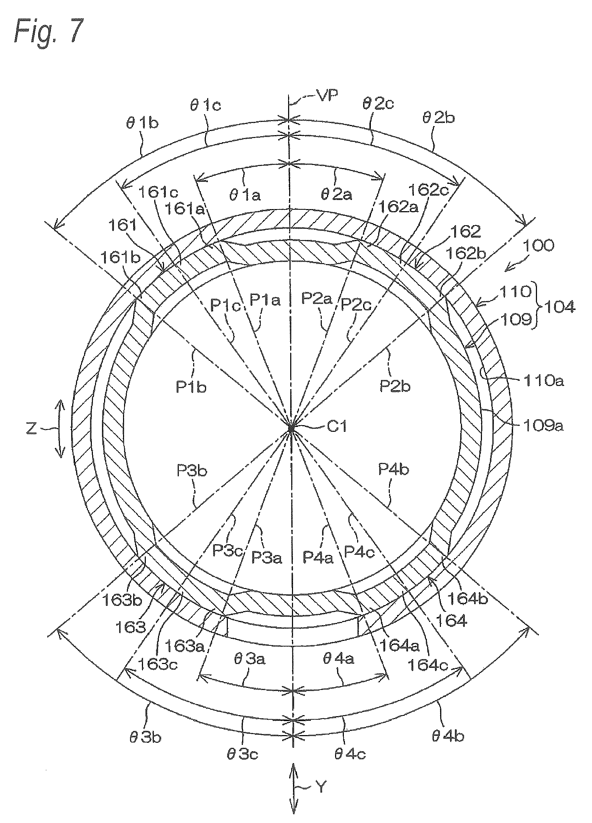

As shown in Fig. 7 which is a sectional view of the steering column 104, a plurality of projections 161, 162, 163, and 164 which come into contact with an outer periphery 110a of the lower tube 110 (second tube) on the outer side are provided on an outer periphery 109a of the upper tube 109 (first tube) on the inner side to extend in the axial direction (a direction which is orthogonal to the paper surface). The plurality of projections 161 to 164 are disposed at unequal intervals in the peripheral direction Z so as to come close to the vertical plane VP side which includes the central axis line C1 of the upper tube 109.

In detail, as shown in Fig. 7, each projection 161 to 164 has a contact region with respect to the lower tube 110 formed in a predetermined range in the peripheral direction Z of the upper tube 109. The projection 161 and the projection 162 are disposed on both sides which interpose the vertical plane VP in the upper half of the upper tube 109 in the peripheral direction Z. The projection 161 and the projection 162 may be disposed symmetrically with respect to the vertical plane VP, and need not be disposed symmetrically.

The projection 163 and the projection 164 are disposed in the lower half of the upper tube 109 in the peripheral direction Z, and are disposed on both sides which interpose the vertical plane VP. The projection 163 and the projection 164 are disposed on both sides which interpose the vertical plane VP, in the lower half of the upper tube 109 in the peripheral direction Z. The projection 163 and the projection 164 may be disposed symmetrically with respect to the vertical plane VP, and need not be disposed symmetrically.

The contact region of the projection 161 with respect to the lower tube 110 is provided with a first end section 161 a at a side close to the vertical plane VP in the peripheral direction Z, a second end section 161b at a side far from the vertical plane VP, and a center section 161c between the first end section 161 a and the second end section 161 b.

An angle θ1c formed between a plane P1c which includes the center section 161c of the projection 161 and the central axis line C1 of the upper tube 109, and the vertical plane VP is 45° or less (θ1c ≤ 45°). Thereby, the projection 161 is disposed so as to come close to the vertical plane VP. In addition, naturally, an angle θ1a formed between a plane P1a which includes the first end section 161 a of the projection 161 and the central axis line C1 of the upper tube 109, and the vertical plane VP is 45° or less (θ1a ≤ 45°). Here, it is more preferable that an angle θ1b formed between a plane P1b which includes the second end section 161b of the projection 161 and the central axis line C1 of the upper tube 109, and the vertical plane VP is 45° or less (θ1b ≤ 45°).

The contact region of the projection 162 with respect to the lower tube 110 is provided with a first end section 162a at a side close to the vertical plane VP in the peripheral direction Z, a second end section 162b at a side far from the vertical plane VP, and a center section 162c between the first end section 162a and the second end section 162b.

An angle θ2c formed between a plane P2c which includes the center section 162c of the projection 162 and the central axis line C1 of the upper tube 109, and the vertical plane VP is 45° or less (θ2c ≤ 45°). Thereby, the projection 162 is disposed so as to come close to the vertical plane VP. In addition, naturally, an angle θ2a formed between a plane P2a which includes the first end section 162a of the projection 162 and the central axis line C1 of the upper tube 109, and the vertical plane VP is 45° or less (θ2a ≤ 45°). Here, it is more preferable that an angle θ2b formed between a plane P2b which includes the second end section 162b of the projection 162 and the central axis line C1 of the upper tube 109, and the vertical plane VP is 45° or less (θ2b ≤ 45°).

The contact region of the projection 163 with respect to the lower tube 110 is provided with a first end section 163a at a side close to the vertical plane VP in the peripheral direction Z, a second end section 163b at a side far from the vertical plane VP, and a center section 163c between the first end section 163a and the second end section 163b.

An angle θ3c formed between a plane P3c which includes the center section 163c of the projection 163 and the central axis line C1 of the upper tube 109, and the vertical plane VP is 45° or less (θ3c ≤ 45°). Thereby, the projection 163 is disposed so as to come close to the vertical plane VP. In addition, naturally, an angle θ3a formed between a plane P3a which includes the first end section 163a of the projection 163 and the central axis line C1 of the upper tube 109, and the vertical plane VP is 45° or less (θ3a ≤ 45°). Here, it is more preferable that an angle θ3b formed between a plane P3b which includes the second end section 163b of the projection 163 and the central axis line C1 of the upper tube 109, and the vertical plane VP is 45° or less (θ3b ≤ 45°).

The contact region of the projection 164 with respect to the lower tube 110 is provided with a first end section 164a at a side close to the vertical plane VP in the peripheral direction Z, a second end section 164b at a side far from the vertical plane VP, and a center section 164c between the first end section 164a and the second end section 164b.

An angle θ4c formed between a plane P4c which includes the center section 164c of the projection 164 and the central axis line C1 of the upper tube 109, and the vertical plane VP is 45° or less (θ4c ≤ 45°). Thereby, the projection 164 is disposed so as to come close to the vertical plane VP. In addition, naturally, an angle θ4a formed between a plane P4a which includes the first end section 164a of the projection 164 and the central axis line C1 of the upper tube 109, and the vertical plane VP is 45° or less (θ4a ≤ 45°). Here, it is more preferable that an angle θ4b formed between a plane P3b which includes the second end section 164b of the projection 164 and the central axis line C1 of the upper tube 109, and the vertical plane VP is 45° or less (θ4b ≤ 45°).

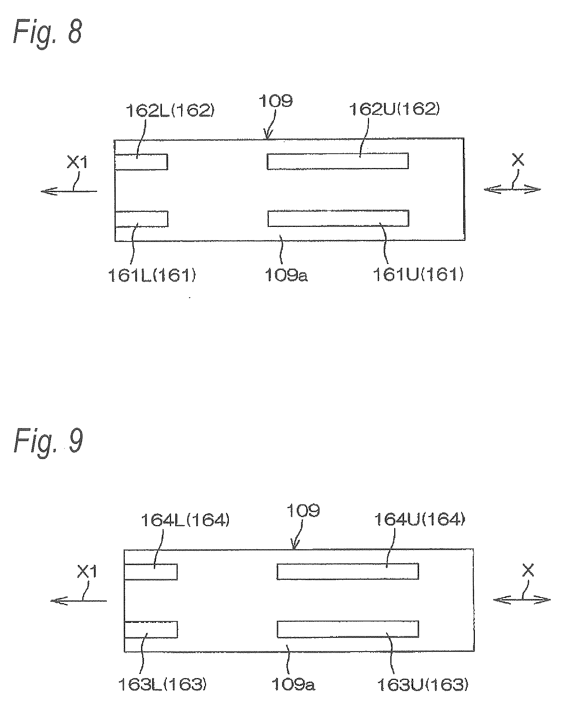

In addition, as shown in Fig. 8 which is a planar view of the upper tube 109, each projection 161 and 62 is provided non-continuously in the axial direction X in the upper half of the upper tube 109 in the peripheral direction. That is, the projection 161 is configured by a projection 161 U on the upper side in the axial direction X and a projection 161L on the lower side in the axial direction X. The projection 162 is configured by a projection 162U on the upper side in the axial direction X and a projection 162L on the lower side in the axial direction X.

In addition, as shown in Fig. 9 which is a bottom surface view of the upper tube 109, each projection 163 and 164 is provided non-continuously in the axial direction X in the lower half of the upper tube 109 in the peripheral direction. That is, the projection 163 is configured by a projection 163U on the upper side in the axial direction X and a projection 163L on the lower side in the axial direction X. The projection 164 is configured by a projection 164U on the upper side in the axial direction X and a projection 164L on the lower side in the axial direction X.

Although not shown in the drawings, since the upper end of the upper tube 109 in the axial direction is thrust obliquely upward at the time of secondary impact, the projections 161 U and 162U on the upper side in the axial direction X in the peripheral direction upper half of the upper tube 109 and the projections 163L and 164L on the lower side in the axial direction X in the peripheral direction lower half of the upper tube 109 are pressed strongly toward the inner periphery 110a of the lower tube 110.

Meanwhile, when locking by the lock mechanism 25 is released for telescopic adjustment, since the upper end side of the upper tube 109 in the axial direction is pushed down by the own weight of the upper tube 109, the own weight of the steering member 2, or the like, the projections 161 L and 162L on the lower side in the axial direction X in the peripheral direction upper half of the upper tube 109 and the projections 163U and 164U on the upper side in the axial direction X in the peripheral direction lower half of the upper tube 109 are pressed strongly toward the inner periphery 110a of the lower tube 110.

According to the present embodiment, the plurality of projections 161 to 164 which come into contact with the inner periphery 110a of the lower tube 110 (second tube) by being provided on the outer periphery 109a of the upper tube 109 (first tube) come close to the vertical plane VP side which includes the central axis line C1 of the upper tube 109 by being disposed at unequal intervals in the peripheral direction Z. Accordingly, it is possible to reduce the sliding load and it is possible to suppress variance of the sliding load when both tubes 109 and 110 slide relatively while the steering shaft 3 is thrust obliquely upward at the time of secondary impact, and when both tubes 109 and 110 slide relatively at the time of telescopic adjustment.

In addition, angles θ1c, θ2c, θ3c, and θ4c formed between the planes P1c, P2c, P3c, and P4c which include the center sections 161c, 162c, 163c, and 164c which relate to the peripheral direction Z of the contact region of each projection 161, 162, 163, and 164 and the central axis line C1 of the upper tube 109 (first tube), and the vertical plane are 45° or less. Thereby, it is possible to suppress variance in the sliding load between both tubes 109 and 110 by substantially suppressing the lower tube 110 (second tube) from being interposed in a wedge shape between the adjacent projections 161, 162; and 163, 164 interposing the vertical plane VP.

In addition, angles θ1b, θ2b, θ3b, and θ4b formed between the planes P1b, P2b, P3b, and P4b which include the second end sections 161 b, 162b, 163b, and 164b of the contact region of each projection 161, 162, 163, and 164 and the central axis line C1 of the upper tube 109 (first tube), and the vertical plane VP are 45° or less. Thereby, since the contact region of each projection 161 to 164 is disposed in a range in which the center angle with the vertical plane VP as a reference, is 45° or less, it is possible to suppress the lower tube 110 (second tube) being interposed in a wedge shape between the adjacent projections 161, 162; and 163, 164 interposing the vertical plane VP. Thereby, it is possible to suppress variance of the sliding load between both tubes 109 and 110.

In addition, it is possible to suppress variance of the sliding load when both tubes 109 and 110 slide via the projections 161 to 164 while generating runout between both tubes 109 and 110.

### (Third Embodiment)

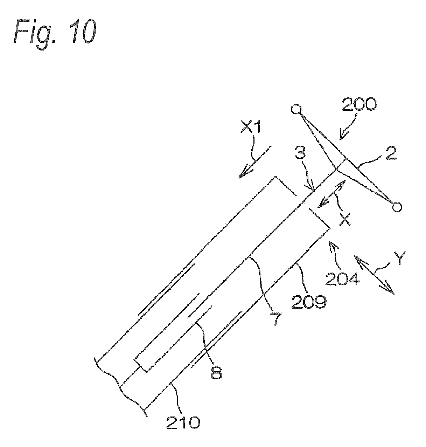

Next, Fig. 10 illustrates a schematic side view of a steering column device 300 of a third embodiment of the present invention. As shown in Fig. 10, a steering column 204 includes an upper tube 209 (second tube) which is an outer tube and a lower tube 210 (first tube) which is an inner tube.

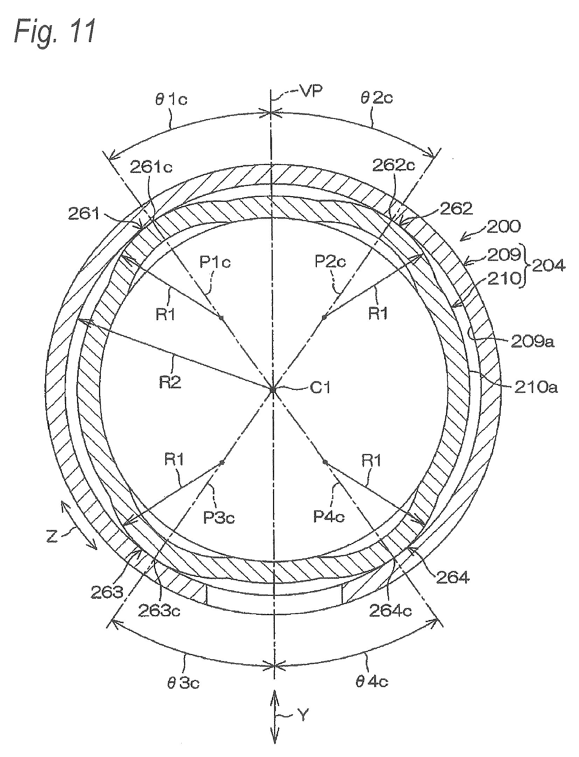

Fig. 11 is a sectional view of the steering column 204. The main differences of the third embodiment from the first embodiment in Fig. 3 will be described with reference to Fig. 11.

That is, a plurality of projections 261, 262, 263, and 264 (equivalent to first projections) which are provided on an outer periphery 201a of a lower tube 210 respectively include top sections 261 c, 262c, 263c, and 264c with a circular cross section which come into contact with an inner periphery 209a of an upper tube 209. A radius of curvature R1 of the top sections 261 c, 262c, 263c, and 264c of each projection 261, 262, 263, and 264 is smaller than a radius of curvature R2 of the inner periphery 209a of the upper tube 209 (R1 < R2).

In addition, angles θ1c, θ2c, θ3c, and θ4c formed between the planes P1c, P2c, P3c, and P4c which include the top sections 261 c, 262c, 263c, and 264c of each projection 261, 262, 263, and 264, and the central axis line C1 of the lower tube 210, and the vertical plane VP are less than 45° (θ1c < 45°, θ2c < 45°, θ3c < 45°, θ4c ≤ 45°).

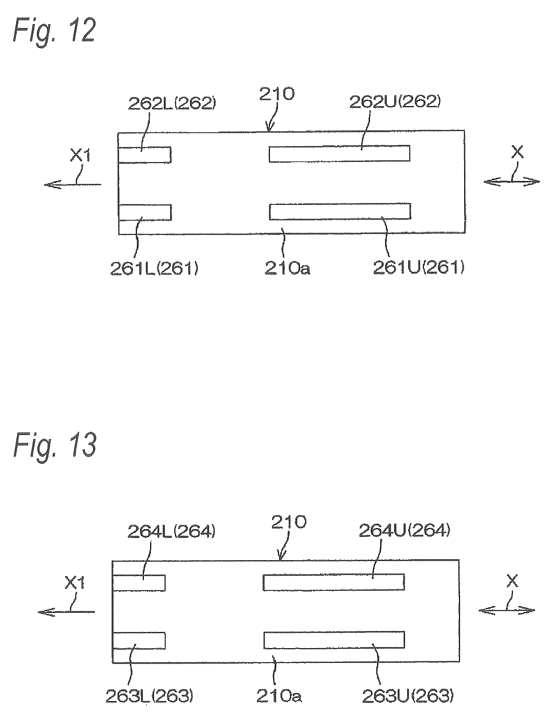

In addition, as shown in Fig. 12 which is a planar view of the lower tube 210, each projection 261 and 262 is provided non-continuously in the axial direction X in the upper half of the lower tube 210 in the peripheral direction. That is, the projection 261 is configured by a projection 261 U on the upper side in the axial direction X and a projection 261 L on the lower side in the axial direction X. The projection 262 is configured by a projection 262U on the upper side in the axial direction X and a projection 262L on the lower side in an axial direction 2X.

In addition, as shown in Fig. 13 which is a bottom surface view of the lower tube 210, each projection 263 and 264 is provided non-continuously in the axial direction X in the lower half of the lower tube 210 in the peripheral direction. That is, the projection 263 is configured by a projection 263U on the upper side in the axial direction X and a projection 263L on the lower side in the axial direction X. The projection 264 is configured by a projection 264U on the upper side in the axial direction X and a projection 264L on the lower side in the axial direction X.

According to the present embodiment, the plurality of projections 261 to 264 which come into contact with the inner periphery 209a of the upper tube 209 (second tube) by being provided on the outer periphery 210a of the lower tube 210 (first tube) come close to the vertical plane VP side which includes the central axis line C1 of the lower tube 210 by being disposed at unequal intervals in the peripheral direction Z. Accordingly, it is possible to reduce the sliding load and it is possible to suppress variance of the sliding load when both tubes 209 and 210 slide relatively while the steering shaft 3 is thrust obliquely upward at the time of secondary impact, and when both tubes 209 and 210 slide relatively at the time of telescopic adjustment.

In particular, since the top sections 261 c to 264c of the projections 261 to 264 with a circular cross section come into contact with respect to the inner periphery 209a of the upper tube 209 (second tube) substantially in a line contact state, it is possible to suppress variance of the contact position in the peripheral direction Z. As a result, it is possible to reliably suppress variance of the sliding load between both tubes 209 and 210.

In addition, as shown in Fig. 11, since each of the projections 261 to 264 are disposed in a range in which the center angle with the vertical plane VP as a reference is less than 45° when the lower tube 210 is viewed from the axial direction, it is possible to suppress the upper tube 209 being interposed in a wedge shape between the adjacent projections 261, 262; and 263, 264 interposing the vertical plane VP. As a result, it is possible to reliably suppress variance in sliding load between both tubes 209 and 210 at the time of secondary impact or during telescopic adjustment.

### (Fourth Embodiment)

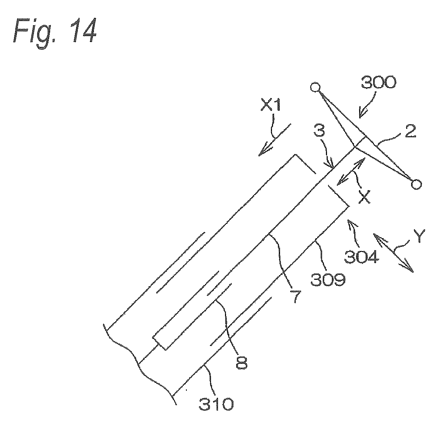

Next, Fig. 14 illustrates a schematic side view of a steering column device 300 of a fourth embodiment of the present invention. As shown in Fig. 14, a steering column 304 includes an upper tube 309 (first tube) which is an inner tube and a lower tube 310 (second tube) which is an outer tube.

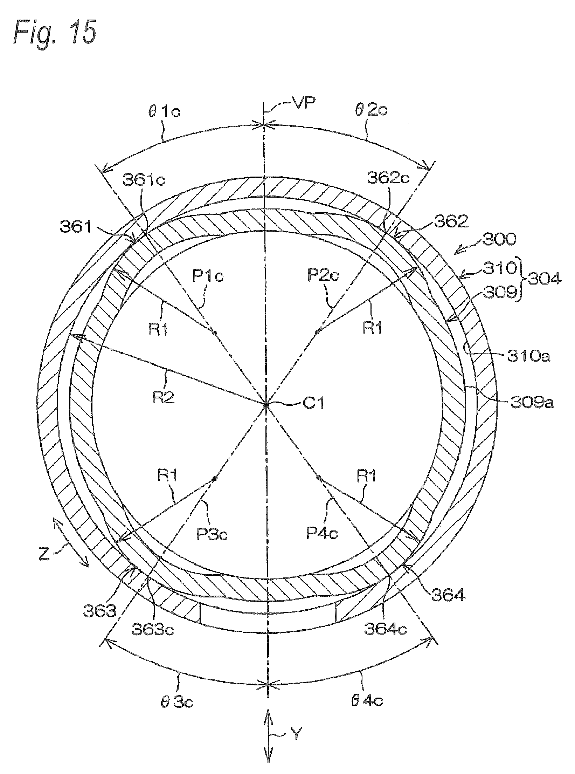

Fig. 15 is a sectional view of the steering column 304. The main differences of the fourth embodiment from the second embodiment in Fig. 7 will be described with reference to Fig. 15.

That is, projections 361, 362, 363, and 364 (equivalent to first projections) which are provided on an outer periphery 309a of the upper tube 309 (first tube) on an inner side respectively include top sections 361 c, 362c, 363c, and 364c with a circular cross section which come into contact with an inner periphery 310a of the lower tube 310 (second tube) on an outer side. A radius of curvature R1 of the top sections 361 c, 362c, 363c, and 364c of each projection 361, 362, 363, and 364 is smaller than a radius of curvature R2 of the inner periphery 310a of the lower tube 310 (R1 < R2).

In addition, angles θ1c, θ2c, θ3c, and θ4c formed between planes P1c, P2c, P3c, and P4c which include the top sections 361 c, 362c, 363c, and 364c of each projection 361, 362, 363, and 364, and the central axis line C1 of the upper tube 309, and the vertical plane VP are less than 45° (θ1c < 45°, θ2c < 45°, θ3c < 45°, θ4c < 45°).

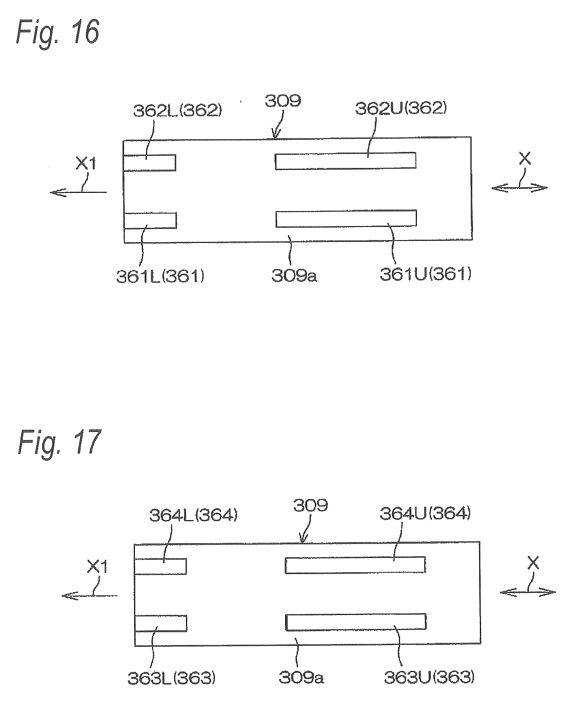

In addition, as shown in Fig. 16 which is a planar view of the upper tube 309, each projection 361 and 362 is provided non-continuously in the axial direction X in the upper half of the upper tube 309 in the peripheral direction. That is, the projection 361 is configured by a projection 361 U on the upper side in the axial direction X and a projection 361 L on the lower side in the axial direction X. The projection 362 is configured by a projection 362U on the upper side in the axial direction X and a projection 362L on the lower side in an axial direction 2X.

In addition, as shown in Fig. 17 which is a bottom surface view of the upper tube 309, each projection 363 and 364 is provided non-continuously in the axial direction X in the lower half of the upper tube 309 in the peripheral direction. That is, the projection 363 is configured by a projection 363U on the upper side in the axial direction X and a projection 363L on the lower side in the axial direction X. The projection 364 is configured by a projection 364U on the upper side in the axial direction X and a projection 364L on the lower side in the axial direction X.

According to the present embodiment, the plurality of projections 361 to 364 which come into contact with the inner periphery 310a of the lower tube 310 (second tube) by being provided on the outer periphery 309a of the upper tube 309 (first tube) come close to the vertical plane VP side which includes the central axis line C1 of the upper tube 309 by being disposed at unequal intervals in the peripheral direction Z. Accordingly, it is possible to reduce the sliding load and it is possible to suppress variance of the sliding load when both tubes 309 and 310 slide relatively while the steering shaft is thrust obliquely upward at the time of secondary impact, and when both tubes 309 and 310 slide relatively at the time of telescopic adjustment.

In particular, since the top sections 361 c to 364c of the projections 361 to 364 with a circular cross section come into contact with respect to the inner periphery 310a of the lower tube 310 (second tube) substantially in a line contact state, it is possible to suppress variance of the contact position in the peripheral direction Z. As a result, it is possible to reliably suppress variance of the sliding load between both tubes 309 and 310.

In addition, as shown in Fig. 15, since each of the projections 361 to 364 are disposed in a range in which the center angle with the vertical plane VP as a reference is less than 45° when the upper tube 309 is viewed from the axial direction,, it is possible to suppress the lower tube 310 being interposed in a wedge shape between the adjacent projections 361, 362; and 363, 364 interposing the vertical plane VP. As a result, it is possible to reliably suppress variance in sliding load between both tubes 309 and 310 at the time of secondary impact or during telescopic adjustment.

### (Fifth Embodiment)

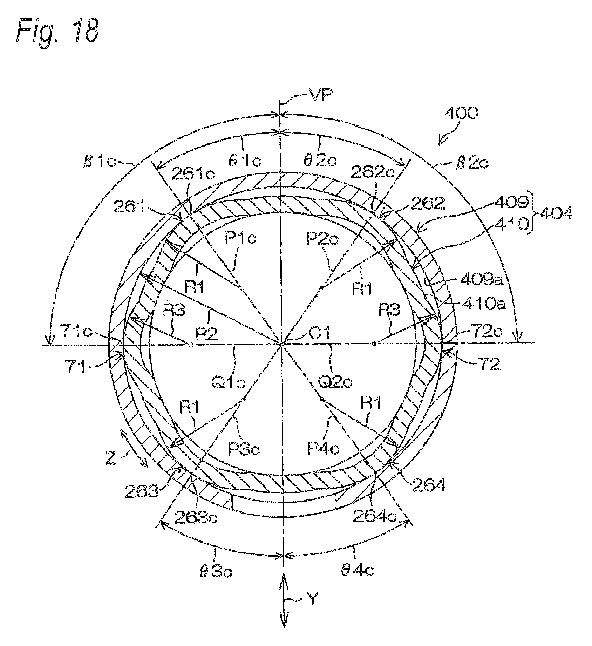

Next, Fig. 18 is a sectional view of a steering column 404 of a steering column device 400 of a fifth embodiment of the present invention.

The main differences of the fifth embodiment from the third embodiment in Fig. 11 will be described with reference to Fig. 18. That is, the plurality of projections which come into contact with an inner periphery 409a of an upper tube 409 (second tube) which is an outer tube by being provided on an outer periphery 410a of a lower tube 410 (first tube) which is an inner tube include the projections 261 to 264 as the plurality of first projections, and a plurality of second projections 71 and 72.

The second projections 71 and 72 respectively include top sections 71 c and 72c with a circular cross section which come into contact with the inner periphery 409a of the upper tube 409. A radius of curvature R3 of the top sections 71 c and 72c is smaller than a radius of curvature R2 of the inner periphery 409a of the upper tube 409 (R3 < R2).

Angles β1c and β2c formed between planes Q1 c and Q2c which include the top sections 71 c and 72c of each second projection 71 and 72 and the central axis line C1 of the lower tube 410, and the vertical plane VP are 45° to 90° (45° ≤ β1c ≤ 90°, 45° ≤ β2c ≤ 90°).

According to the present embodiment, in the same manner as the third embodiment, using the first projections 261 to 264, it is possible to suppress the sliding load between both tubes to be low at the time of secondary impact or during telescopic adjustment. Furthermore, it is possible to improve rigidity in the left and right direction of the steering column 404 using the second projections 71 and 72 which are disposed in a range in which a center angle is 45° to 90° with the vertical plane VP as a reference when the lower tube 410 is viewed from the axial direction.

### (Sixth Embodiment)

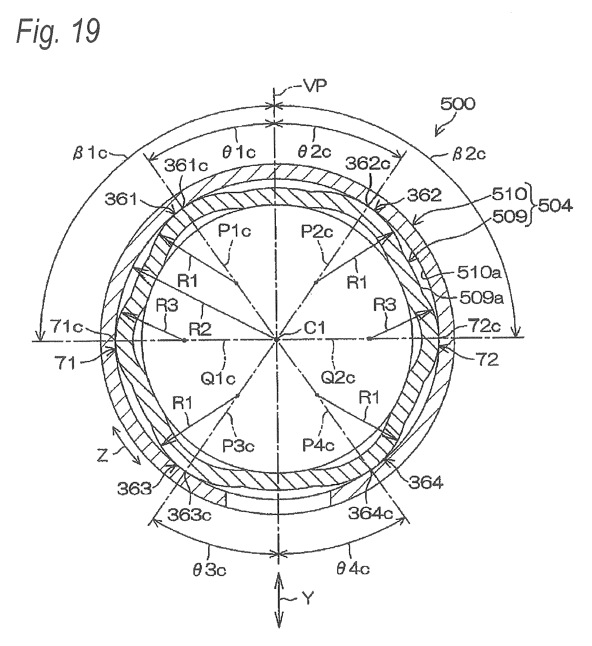

Next, Fig. 19 is a sectional view of a steering column 504 of a steering column device 500 of a sixth embodiment of the present invention.

The main differences of the sixth embodiment from the fourth embodiment in Fig. 15 will be described with reference to Fig. 19. That is, the plurality of projections which come into contact with an inner periphery 510a of a lower tube 510 (second tube) which is an outer tube by being provided on an outer periphery 509a of an upper tube 509 (first tube) which is an inner tube include the projections 361 to 364 as the plurality of first projections, and a plurality of second projections 71 and 72.

The second projections 71 and 72 respectively include top sections 71c and 72c with a circular cross section which come into contact with the inner periphery 409a of the upper tube 409. A radius of curvature R3 of the top sections 71 c and 72c is smaller than a radius of curvature R2 of the inner periphery 409a of the upper tube 409 (R3 < R2).

Angles β1c and β2c formed between planes Q1c and Q2c which include the top sections 71 c and 72c of each second projection 71 and 72 and the central axis line C1 of the upper tube 509, and the vertical plane VP are 45° to 90° (45° ≤ β1c ≤ 90°, 45° ≤ β2c ≤ 90°).

According to the present embodiment, in the same manner as the fourth embodiment, using the first projections 361 to 364, it is possible to suppress the sliding load between both tubes 509 and 510 to be low at the time of secondary impact or during telescopic adjustment. Furthermore, it is possible to improve rigidity in the left and right direction of the steering column 504 using the second projections 71 and 72 which are disposed in a range in which a center angle is 45° to 90° with the vertical plane VP as a reference when the upper tube 509 is viewed from the axial direction.

### (Referential Embodiments)

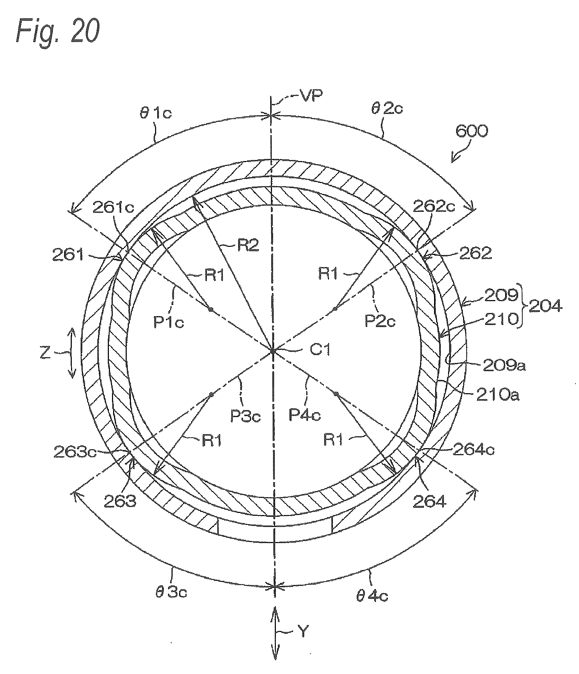

Fig. 20 illustrates a referential embodiment of the present invention. The main differences of the referential embodiment from the third embodiment in Fig. 11 will be described with reference to Fig. 20.

That is, in the third embodiment in Fig. 11, the projections 261 to 264 come close to the vertical plane VP side which includes the central axis line C1 of the lower tube 210 by being disposed at unequal intervals in the peripheral direction Z. Angles θ1c to θ4c formed between the planes P1c to P4c which include the top sections 261 c to 264c of each projection 261 to 264 and the central axis line C1 of the lower tube 210, and the vertical plane VP are less than 45°.

In contrast to this, in the referential embodiment, the projections 261 to 264 do not come close to the vertical plane VP side which includes the central axis line C1 of the lower tube 210. Angles θ1c to θ4c formed between the planes P1c to P4c which include the top sections 261 c to 264c of each projection 261 to 264 and the central axis line C1 of the lower tube 210, and the vertical plane VP are 45° to 90°.

In the referential embodiment, it is possible to improve the rigidity in the left and right direction of the steering column using the projections 261 to 264.

Here although not illustrated, as another referential embodiment, it is possible to exemplify a configuration in which angles θ1c to θ4c formed between the planes P1c to P4c which include the top sections 361 c to 364c of each projection 361 to 364 and the central axis line C1 of the upper tube 309, and the vertical plane VP are 45° to 90° in the fourth embodiment in Fig. 15.

The present invention is not limited to the embodiments, and it is possible for various modifications to be carried out on the present invention within the scope of the claims.

### Industrial Applicability

According to the present invention, a steering column device is provided which is able to suppress variance in sliding load.

### Reference Signs List

1 STEERING COLUMN DEVICE
2 STEERING MEMBER
3 STEERING SHAFT
4 STEERING COLUMN
7 UPPER SHAFT
8 LOWER SHAFT
9 UPPER TUBE (SECOND TUBE)
9a INNER PERIPHERY
10 LOWER TUBE (FIRST TUBE)
10a OUTER PERIPHERY
16 UPPER FIXING BRACKET
18 VEHICLE-BODY SIDE MEMBER
22 UPPER COLUMN BRACKET
23 HANGING MECHANISM
24 SUPPORT BRACKET
25 LOCK MECHANISM
26 OPERATION LEVER
27 TELESCOPIC LONG HOLE
28 FASTENING SHAFT
29 OPENING
30 PUSH-UP CAM
35 HANGING BOLT
37 MOUNTING PLATE
39 PLATE TO BE MOUNTED
40 FIXING SCREW
41 RESIN PIN
44 TILT LONG HOLE
46 NUT
47 CAM MECHANISM
48 FIRST CAM
49 SECOND CAM
61, 62, 63, 64; 61 U, 61 L; 62U, 62L; 63U, 63L; 64U, 64L PROJECTION
61a, 62a, 63a, 64a FIRST END SECTION
61b, 62b, 63b, 64b SECOND END SECTION
61c, 62c, 63c, 64c CENTER SECTION
71, 72 SECOND PROJECTION
100 STEERING COLUMN DEVICE
104 STEERING COLUMN
109 UPPER TUBE (FIRST TUBE)
109a OUTER PERIPHERY
110 LOWER TUBE (SECOND TUBE)
110a INNER PERIPHERY
161, 162, 263, 164; 161U, 161L; 162U, 162L; 163U, 163L; 164U, 164L PROJECTION
161a, 162a, 163a, 164a FIRST END SECTION
161b, 162b, 163b, 164b SECOND END SECTION
161c, 162c, 163c, 164c CENTER SECTION
200 STEERING COLUMN DEVICE
204 STEERING COLUMN
209 UPPER TUBE (SECOND TUBE)
209a INNER PERIPHERY
210 LOWER TUBE (FIRST TUBE)
210a OUTER PERIPHERY
261, 262, 263, 264; 261 U, 261 L; 262U, 262L; 263U, 263L; 264U, 264L PROJECTION (FIRST PROJECTION)
300 STEERING COLUMN DEVICE
304 STEERING COLUMN
309 UPPER TUBE (FIRST TUBE)
309a OUTER PERIPHERY
310 LOWER TUBE (SECOND TUBE)
310a INNER PERIPHERY
361, 362, 363, 364; 361 U, 361 L; 362U, 362L; 363U, 363L; 364U, 364L PROJECTION (FIRST PROJECTION)
400 STEERING COLUMN DEVICE
404 STEERING COLUMN
409 UPPER TUBE (SECOND TUBE)
409a INNER PERIPHERY
410 LOWER TUBE (FIRST TUBE)
410a OUTER PERIPHERY
500 STEERING COLUMN DEVICE
504 STEERING COLUMN
509 UPPER TUBE (FIRST TUBE)
509a OUTER PERIPHERY
510 LOWER TUBE (SECOND TUBE)
510a INNER PERIPHERY
C1 CENTRAL AXIS LINE
P1a, P2a, P3a, P4a PLANE (INCLUDING FIRST END SECTION OF PROJECTION AND CENTRAL AXIS LINE)
P1b, P2b, P3b, P4b PLANE (INCLUDING SECOND END SECTION OF PROJECTION AND CENTRAL AXIS LINE)
P1c, P2c, P3c, P4c PLANE (INCLUDING CENTER SECTION OF PROJECTION AND CENTRAL AXIS LINE)
R1, R3 RADIUS OF CURVATURE (OF TOP SECTION OF PROJECTION)
R2 RADIUS OF CURVATURE (OF INNER PERIPHERY OF SECOND TUBE)
VP VERTICAL PLANE (INCLUDING CENTRAL AXIS LINE)
K FASTENING SHAFT DIRECTION
X AXIAL DIRECTION (OF STEERING SHAFT)
X1 COLUMN MOVEMENT DIRECTION
Y TILT DIRECTION
Z PERIPHERAL DIRECTION
θ1a, θ2a, θ3a, θ4a ANGLE (FORMED BETWEEN PLANE INCLUDING FIRST END SECTION OF PROJECTION AND CENTRAL AXIS LINE, AND VERTICAL PLANE)
θ1b, θ2b, θ3b, θ4b ANGLE (FORMED BETWEEN PLANE INCLUDING SECOND END SECTION OF PROJECTION AND CENTRAL AXIS LINE, AND VERTICAL PLANE)
θ1c, θ2c, θ3c, θ4c ANGLE (FORMED BETWEEN PLANE INCLUDING CENTER SECTION (TOP SECTION) OF PROJECTION AND CENTRAL AXIS LINE, AND VERTICAL PLANE)

## Claims

1. A steering column device comprising:
a first tube on an inner side and a second tube on an outer side which are fitted into each other so as to be relatively slidable in an axial direction, and rotatably support a steering shaft,
wherein a plurality of projections that come into contact with the inner periphery of the second tube and extending in an axial direction of the first tube are provided on an outer periphery of the first tube, and
wherein the plurality of projections are disposed at unequal intervals in a peripheral direction of the first tube so as to come close to the vertical plane which includes a central axis line of the first tube.

2. The steering column device according to Claim 1, wherein
each of the projections includes a top section with a circular cross section which comes into contact with the inner periphery of the second tube, and
a radius of curvature of the top section of each of the projections is smaller than a radius of curvature of the inner periphery of the second tube.

3. The steering column device according to Claim 2, wherein
the plurality of projections include a plurality of first projections, and
an angle formed between a plane which includes the top section of each of the first projections and the central axis line of the first tube, and the vertical plane is less than 45°.

4. The steering column device according to Claim 3, wherein
the plurality of projections include a plurality of second projections, and
an angle formed between a plane which includes the top section of each of the second projections and the central axis line of the first tube, and the vertical plane is more than or equal to 45° and is less than or equal to 90°.

5. The steering column device according to Claim 1, wherein
the plurality of projections include a plurality of first projections,
each of the first projections has a contact region with respect to the second tube formed in a predetermined range in a peripheral direction of the first tube,
the contact region includes a first end section on a side close to the vertical plane in the peripheral direction, a second end section on a side far from the vertical plane, and a center section between the first end section and the second end section, and
an angle formed between a plane which includes the center section of each of the first projections and the central axis line of the first tube, and the vertical plane is less than or equal to 45°.

6. The steering column device according to Claim 5, wherein
an angle formed between a plane which includes the second end section of each of the first projections and the central axis line of the first tube, and the vertical plane is less than or equal to 45°.

7. The steering column device according to any one of Claims 1 to 6, wherein
each of the projections is provided non-continuously in the axial direction of the first tube.

8. The steering column device according to any one of Claims 1 to 7, wherein the first tube is a lower tube, and the second tube is an upper tube.

9. The steering column device according to any one of Claims 1 to 7, wherein the first tube is an upper tube, and the second tube is a lower tube.
